(19) Europäisches Patentamt
European Patent Office
Office européen des brevets

(11) **EP 2 410 395 B1**

(12) **EUROPEAN PATENT SPECIFICATION**

(45) Date of publication and mention
of the grant of the patent:
**10.09.2014 Bulletin 2014/37**

(51) Int Cl.:
***G05D 1/02*** *(2006.01)*

(21) Application number: **11172641.0**

(22) Date of filing: **05.07.2011**

(54) **System and method for real-time mapping of an indoor environment using mobile robots with limited sensing**

System und Verfahren zur Echtzeit-Abbildung einer Innenumgebung mit mobilen Robotern mit eingeschränkter Abtastung

Système et procédé de cartographie en temps réel d'un environnement intérieur utilisant des robots mobiles avec détection limitée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2010 US 841065**

(43) Date of publication of application:
**25.01.2012 Bulletin 2012/04**

(73) Proprietor: **Palo Alto Research Center
Incorporated
Palo Alto, California 94304 (US)**

(72) Inventors:
• **Zhang, Ying
Cupertino, CA 95014 (US)**
• **Liu, Juan
Milpitas, CA 95035 (US)**
• **Hoffmann, Gabriel M
Palo Alto, CA 94306 (US)**

(74) Representative: **Skone James, Robert Edmund
Gill Jennings & Every LLP
The Broadgate Tower
20 Primrose Street
London EC2A 2ES (GB)**

(56) References cited:
**WO-A1-03/040845**

• **LAKAEMPER R: "Simultaneous multi-line-segment merging for robot mapping using Mean shift clustering", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 1654-1660, XP031581186, ISBN: 978-1-4244-3803-7**
• **YAN YU ET AL: "Integrating Line Segment Based Maps in Multi-Robots Exploration", FUTURE INFORMATION TECHNOLOGY AND MANAGEMENT ENGINEERING, 2009. FITME '09. SECOND INTERNATIONAL CONFERENCE ON, IEEE, PISCATAWAY, NJ, USA, 13 December 2009 (2009-12-13), pages 230-233, XP031610494, ISBN: 978-1-4244-5339-9**
• **NAVARRO D ET AL: "Line-based incremental map building using infrared sensor ring", EMERGING TECHNOLOGIES AND FACTORY AUTOMATION, 2008. ETFA 2008. IEEE INTERNATIONAL CONFERENCE ON, IEEE, PISCATAWAY, NJ, USA, 15 September 2008 (2008-09-15), pages 833-838, XP031344711, ISBN: 978-1-4244-1505-2**

- **ZALAMA E ET AL: "Concurrent mapping and localization for mobile robots with segmented local maps", PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002; [IEEE/RSJ INTERNATIONAL CONFERENCE ON INTELLIGENT ROBOTS AND SYSTEMS], NEW YORK, NY : IEEE, US, vol. 1, 30 September 2002 (2002-09-30), pages 546-551, XP010609308, DOI: 10.1109/IRDS.2002.1041447 ISBN: 978-0-7803-7398-3**

**Description**

**Field**

This application relates in general to characterization of a physical environment by mobile robots and, in particular, to a system and method for real-time mapping of an indoor environment using mobile robots with limited sensing.

**Background**

Mapping of, and localization within, an environment is critical for efficient and effective robot exploration and navigation. Mapping is useful for identifying features of the environment that can increase or hinder the objectives of the mobile robot. For example, identification of corners or intersections of hallways within an indoor environment is useful for surveillance and networking applications. Additionally, knowledge of whether a robot has previously traversed an area aids in conservation of battery life and time efficiency.

Mobile robots are often deployed in physical environments that are uncharted, remote, or inaccessible to conventional measuring techniques. To function most effectively, mobile robots need to discover the properties of the physical environment they are located in. Knowing details of the location can assist navigation, communication, and object retrieval or placement.

Mapping the physical environment can help determine the size of the area explored by the robot, and, if the robot gets stuck or otherwise blocked by an obstacle, allows the robot to return to a known, higher value area. The identification of the physical environment also helps to determine whether the entire area has been traversed, what part of the area has provided better connectivity between the robot, and any additional robots, and users, as well as optimization of movement of the robot, which maximizes battery life and minimizes time of exploration.

Generally, mobile robots use self-contained on-board guidance systems, which can include environmental sensors to track relative movement, detect collisions, identify obstructions, or provide an awareness of the immediate surroundings. Sensor readings are used to plan the next robotic movement or function to be performed. Movement can occur in a single direction or could be a sequence of individual movements, turns, and stationary positions.

Conventional modes of mapping of a physical environment by robots include using a comprehensive sensor suite with long-range sensors, such as cameras, ultrasonic rangers, and light detection and ranging (LIDAR) to detect obstacles in front of, or surrounding, the robot. Long-range measurement of the environment has a large overhead, both economically due to the high cost of components, and efficiency, due to high power demands. Additionally, high-level computer cognitive models are used for environment mapping but incur a high computational overhead that often requires external, and time delayed, computation. These requirements for sensor-rich robots and powerful computation can be beyond the capabilities low-power robots with short-range sensors.

WO-A-03/040845 describes an autonomous machine that explores the area in which it is located, constructing a map of the area based on information collected by the machine as the machine explores the area. The machine determines when it has returned to a previously visited position within the area. The map is corrected when the machine returns to the previously visited position, based on the knowledge that the current position and the previously visited position are the same.

Therefore, there is a need for an approach to on-board real-time mapping of an environment that is both cost-effective and efficient. Preferably, such an approach will be able to filter out errors created by sensor misreadings and obstacles within the physical environment.

**Summary**

In accordance with a first aspect of the invention, a system for real-time mapping of an indoor environment using a mobile robot with short range sensing comprises:

> a segmentation module applying trace segmentation to raw trajectory data comprising a plurality of trajectory points from wall-following to generate line segments;
> a rectification module rectifying the line segments to one another; and
> a map module generating a map from the rectified line segments,
> and is characterized in that the rectification module is adapted to identify a history horizon of the current line segment, wherein the history horizon is a neighborhood of line segments within a distance of the current line segment, to identify a turning angle of each of the line segments based on the history horizon, and to rectify the line segments based on the line segments of the history horizon and the turning angle.

In accordance with a second aspect of the present invention, a method for real-time mapping of an indoor environment using a mobile robot with short range sensing comprises:

> receiving raw trajectory data comprising a plurality of trajectory points from wall-following;
> applying trace segmentation to the raw trajectory data to generate line segments;
> rectifying the line segments to one another; and
> generating a map from the rectified line segments,
> and is characterized by identifying a history horizon of the current line segment, wherein the history horizon is a neighborhood of line segments within a distance of the current line segment, identifying a turning angle of each of the line segments based on the history horizon, and rectifying the line segments based on the line segments of the history horizon and the turning angle.

Characteristics of a physical environment are determined based on data collected by a mobile robot. The mobile robot motion pattern and ongoing analysis of data received from sensors can be used for on-board real-time mapping of the environment by the mobile robot.

**Brief Description of the Drawings**

FIGURE 1 is a block diagram showing, by way of example, a representative physical environment for deployment of a mobile robot.
FIGURE 2 is a flow diagram showing, by way of example, a method for real-time mapping of an indoor environment using mobile robots with limited sensing.
FIGURE 3 is a flow diagram showing wall-following for use in the method of FIGURE 2.
FIGURE 4 is a flow diagram showing trace segmentation for use in the method of FIGURE 2.
FIGURE 5 is a flow diagram showing map rectification for use in the method of FIGURE 2.
FIGURE 6 is a flow diagram showing loop detection and closure for use in the method of FIGURE 2.

**Detailed Description**

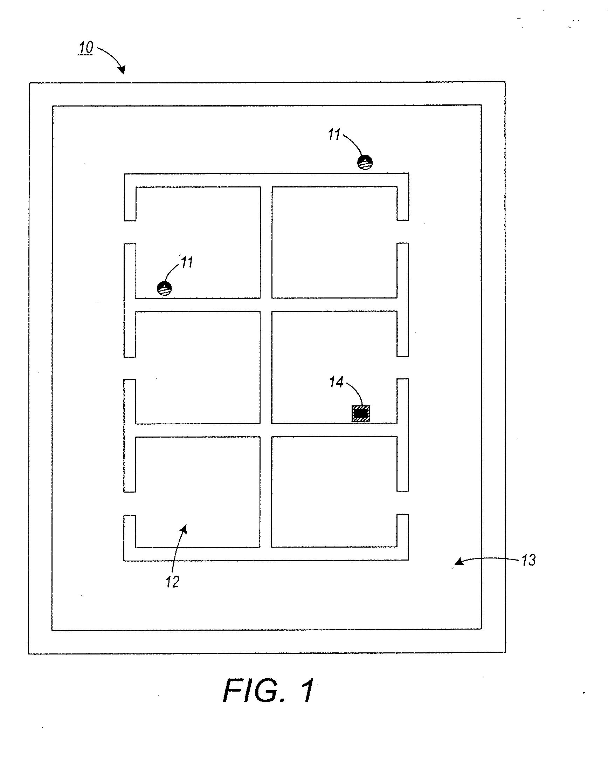

A physical environment is mapped in real-time based on motion patterns of a mobile robot. FIGURE 1 is a block diagram showing, by way of example, a representative physical environment 10 for deployment of a mobile robot 11. The physical environment 10 can include one or more rooms 12 and hallways 13 separated by walls. Other components of the physical environment 10 are possible. One or more mobile robots 11 can be deployed within the physical environment 10. Additionally, one or more obstructions 14, or obstacles, can be in the environment 10.
The mobile robot 11 can include a power source, a communication interface to interface to other robots, base stations, and user nodes. The robot can also include motive power and a self-contained guidance system to move and guide the mobile robot about the environment, odometry to measure the distance traveled by, and position of, the mobile robot 11 within the environment, a left bump sensor and, optionally, a right bump sensor, and a heading component to calculate the heading of the robot around a 360 degree axis extending longitudinally through the center of the robot. In a further embodiment, the mobile robot 11 can include one or more short-range, such as infrared or ultrasonic, wall sensors for detection of an object, such as a wall, prior to the robot coming into physical contact with the object. Other robot 11 structures and components are possible.
The robot 11 can also include an interface to a processor that can be implemented as an embedded micro-programmed system or as a general-purpose portable computer system, such as a notebook computer. The processor includes one or more modules for analyzing data gathered by the robot to characterize the physical environment in which the robot is deployed, as described herein. The processor is a programmable computing device that executes software programs and includes, for example, a central processing unit, memory, network interface, persistent storage, and various components for interconnecting these components. The modules can be implemented as a computer program or procedure written as source code in a conventional programming language and is presented for execution by the central processing unit as object or byte code.
Alternatively, the modules could also be implemented in hardware, either as integrated circuitry or burned into read-only memory components. The various implementations of the source code and object and byte codes can be held on a computer-readable storage medium, such as a floppy disk, hard drive, digital video disk (DVD), random access memory (RAM), read-only memory (ROM) and similar storage mediums. Other types of modules and module functions are possible, as well as other physical hardware components.
In one embodiment, the data gathered is analyzed in real-time by the embedded, or on-board, processor and the output stored for later access in memory. In another embodiment, the output is stored on an external computer interfaced to by the robot 11 through the network interface. In a still further embodiment, data collected from multiple robots 11 is, grouped, analyzed, and compared in combination with one another. Other data analysis and storage combinations are possible.

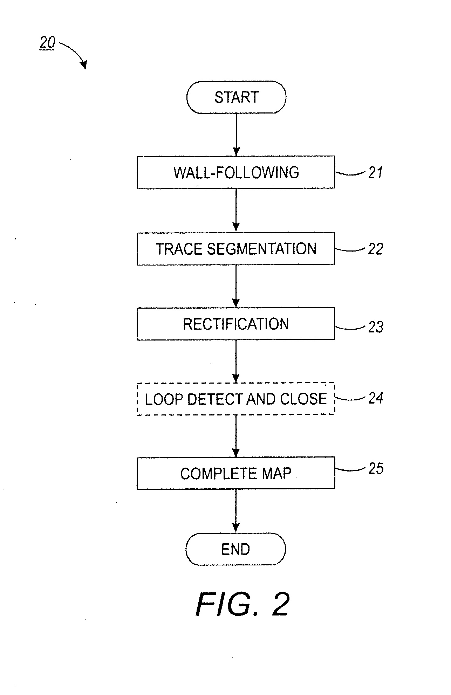

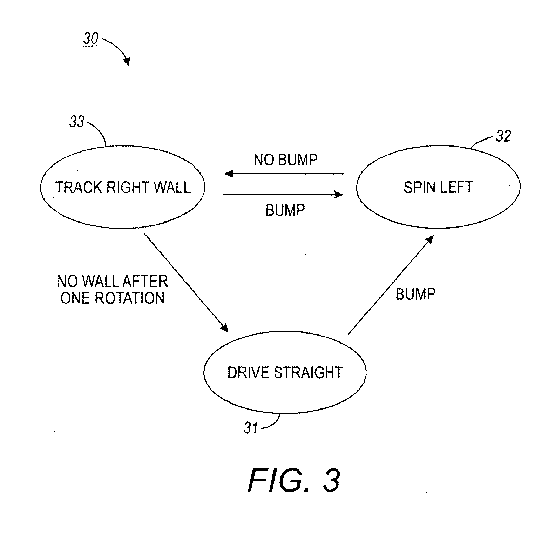

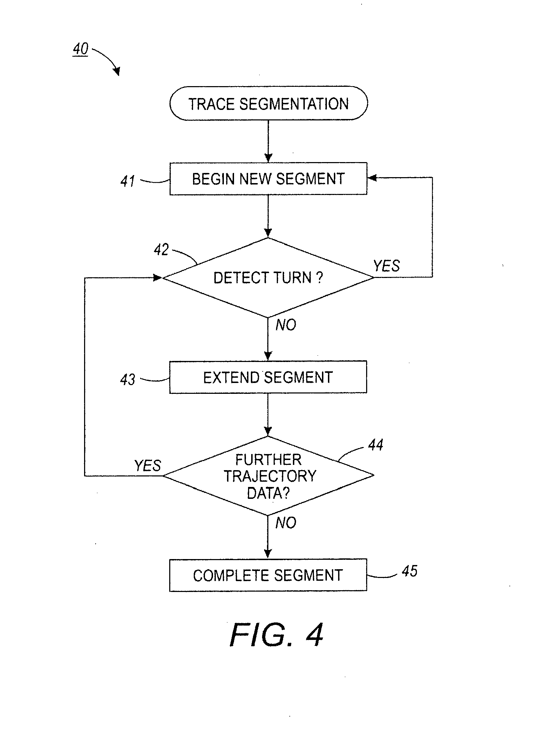

Raw data collected by the module robot 11 is analyzed to determine an environmental map in real-time. FIGURE 2 is a flow diagram showing, by way of example, a method for real-time mapping of an indoor environment using mobile robots with limited sensing. The robot 11 moves around the environment 10 using a wall-following strategy (block 21), as further discussed below with reference to FIGURE 3. Raw trajectory data, including distance traveled and turning angle is collected during the wall-following through the odometry. Further trajectory data can be collected from the wall sensor and bump sensors. The raw trajectory data is piecewise line fit using trace segmentation (block 22), as further discussed below with reference to FIGURE 4.

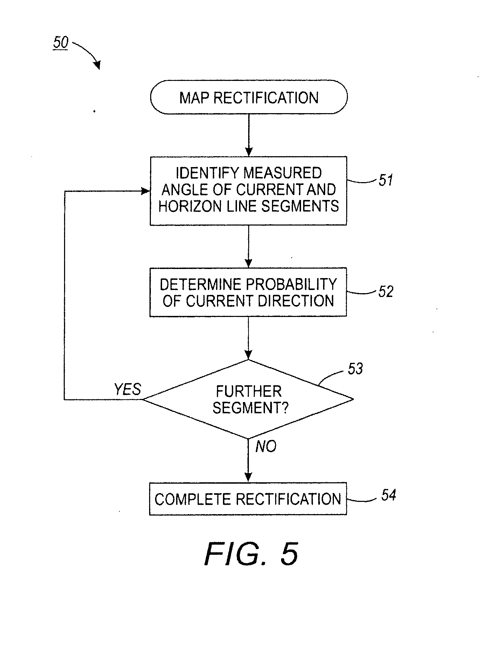

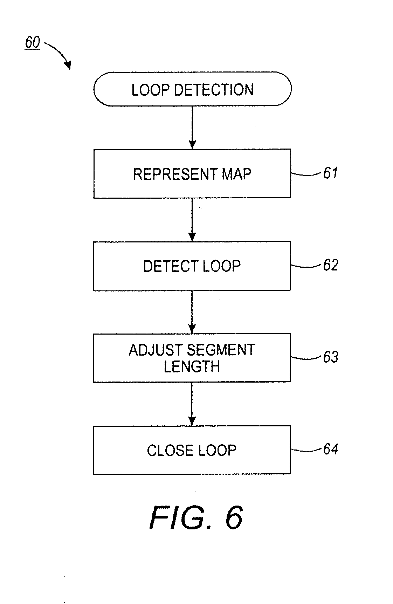

The line segments are then rectified so that they are either parallel or perpendicular to one another (block 23), as further discussed below with reference to FIGURE 5. Optionally, any looping by the mobile robot 11 over previously traversed areas is detected and the loop can then be closed (block 24), as further discussed below with reference to FIGURE 6. Finally, the map is completed (block 25).

Wall-following allows complete traversal of the boundary of an environment during robot 11 exploration. Additionally, regions previously traversed can be reached through reverse wall-following by travelling along the walls in the opposite direction than before without the need for accurate odometry. FIGURE 3 is a flow diagram showing wall-following for use in the method of FIGURE 2. Raw trajectory data, including distance traveled and orientation angle from odometry, wall sensor, and bumper sensor readings, are collected and stored during robot movement. Once introduced into an environment, data is collected by the robot 11 to determine if the wall sensor has detected a wall.

In one embodiment, a wall sensor located on the right side of the robot 11 is used for wall-following. If no wall is detected, the robot 11 rotates clockwise until the wall sensor is triggered. If the wall sensor is not triggered after a full rotation the robot 11 moves in a linear direction 31 until one or both of the bump sensors detects an object through contact, assumed to be a wall, and is triggered. Once one of the bump sensors is triggered, the robot 11 rotates counterclockwise 32 until the bump sensor is no longer triggered and then follows, or tracks, the wall 33 using the wall sensor.

The odometry collects distance and orientation angle data on a regular basis. The robot frame of reference is determined based on an initial positioning, or pose, of the robot when deployed in the physical environment. Alternatively, the pose of the robot can be reset to the initial position at anytime prior to collecting odometry readings. For example, the initial, or starting, position of the robot can be set to $(x_o, y_o, \theta_0)$, where x and $y$ are coordinates and $\theta$ is orientation and, initially, are set to 0. Any current position $(x_k, y_k, \theta_k)$, when odometry data is collected, can be calculated by $x_k = x_{k-1} + d\cos(\theta_k)$, $y_k = y_{k-1} + d\sin(\theta_k)$, and $\theta_k = \theta_k + a$, where $d$ and $a$ are current distance and angle measurements from the last point where a measurement was made, respectively. Other positioning determinations are possible.

Errors, or noise, in the odometry readings can occur due to quantization, such as errors in calculating orientation degree, and wheel slippage. Other sources of errors are possible. Distance errors are usually small while angle errors can be large due to roundoff and accumulator reset-when-read. For example, in one embodiment, the resolution of the sensors for distance is 0.001 meters and 1 °, or 0.0175 radians, for angle measurements. The measurements of distance and angle are reset to 0 after each reading. If sampling time for a reading is too small or in cases where the angles change slowly such that the angle movement is less than 1 ° between samples, the reading of angles would be 0 even though the real movements accumulated can be positive or negative. Increasing the sampling rate may cause other source of errors such as delay of response. Other resolutions are possible, though may be limited by digitization. Errors are corrected based on assumptions made about the external environment, as further discussed below beginning with reference to FIGURE 4.

Additionally, data is recorded from the left bumper (*bl*) and wall sensor (wr). When the left bump sensor is triggered, the *bl* reading is set to one, otherwise the reading is set to zero. A change in bump sensor reading from zero to one indicates the robot 11 is likely turning left, or counterclockwise. The wall sensor reading, wr, is set to one when the sensor measurement is above an intensity threshold, indicating an obstacle, assumed to be a wall, close to the right side of the robot 11. If the measurement is below the threshold, the robot is likely not close to an obstacle on the right side and the wall sensor reading is set to zero. In a further embodiment, the wall sensor is located on the left side of the robot 11. The wall-following strategy is then reversed, for example, the rotation of the robot when no wall is detected by the wall sensor is counterclockwise. Other wall-following strategies are possible.

The bumper and wall sensor readings can be collected on a regular, periodic, or intermittent basis. In one embodiment, the sensors are polled at 20 Hz, and raw trajectories *(x, y, bl, wr)* are stored both at 1 Hz and whenever a state of the bump sensor or wall sensor changes. Other data collection frequencies are possible.

Trace segmentation of collected data filters out common sensor errors and reduces computational overhead for mapping. FIGURE 4 is a flow diagram showing trace segmentation for use in the method of FIGURE 2. During trace segmentation, raw trajectory data collected from the odometry, bump sensor, and wall sensor is piecewise line fit. The individual trajectory points are clustered into short linear segments. The line segments are then rectified into discrete rectilinear directions using a probabilistic approach, as further discussed below with reference to FIGURE 5. Clustering individual data points into line segments greatly reduces computation complexity, and subsequently, computation overhead for the robot, because rectification is applied to a smaller number of line segments instead of a larger number of individual points. Additionally, trace segmentation can remove some of the measurement and control noise. Although wall-following can generate zigzag or curved trajectories due to fine control strategies and sensor noises, segmentation produces consecutive lines that outline the boundaries of obstacles. In most indoor environments, walls or obstacles are straight and therefore can be captured by such filters efficiently.

Line segments are generated using input trajectories over time. For example, input data $\{x_k, y_k, bl_k, wr_k\}_k = 1, 2, ..., K$, where $(x_k, y_k)$ is the location coordinate, and $blk$, and $wr_k$ are the left bumper and wall sensor readings, respectively, is used to generate output as line segment, represented by $\{l_i, \theta_i, ti\}$, where $l$ is length of a line segment, $\theta$ is orientation of the segment with respect to the robot's reference frame, in other words, the orientation with respect to the initial orientation, and $t$ indicates whether the line segment has turned left, right, or is straight in reference to the previous line segment.

Initially, a line segment is begun (block 41) using the first two trajectory data points collected. Length, $l,$ is determined according to the equation $l = \sqrt{(x_2 - x_1)^2 + (y_2 - y_1)^2}$, where $(x_1, y_l)$ and $(x_2, Y_2)$ are the location coordinate positions of the first and second trajectory points, respectively. Orientation of the segment is determined according to the equation $\theta = arctan(y_2 - y_1, x_2 - x_1)$, and $t$ is initially set to straight. Each subsequent trajectory point is added to the current line segment until a turn is detected (block 42). When a turn is identified, a new line segment is begun with the next two trajectory data points.

Turns can be detected in a number of ways. The odometry, bump sensor, and wall sensor can provide information for determining a change in directions for the robot 11. A change in bump sensor state, $bl_k$, occurs when the bump sensor is triggered through contact with an obstacle. The state is set to 0 when the bump sensor is not triggered. When the left bump sensor has a current reading of $bl_k = 1$, indicating bump sensor contact, and the previous data point, $bl_{k-1}$, was 0, then the robot has turned to the left and a new segment is begun, starting with $bl_k$, and t for the new segment is set to *left.*

When the wall sensor intensity is above a threshold value, the robot 11 is following the wall. The state of the wall sensor is set to 1 when above the threshold and is 0 when the intensity is below the threshold. When $wr_k = 0$ and $wr_{k-1} = 1$, the robot turns right in response to lost contact with the wall and t for the new segment is set to *right.*

Data collected through the odometry can be used to detect a change in direction as well. The distance from the current point to the current line segment is compared to the distance between the current point and previous points. The distance, $d_k$, from the current point, $(x_k, Y_k)$, to the current line segment is determined according to the equation $d_k = |\cos(\theta)(y_k - y^b) - \sin(\theta)(x_k - x^b)|$, where $(x^b, y^b)$ is the beginning point of the current segment and $\theta$ is the orientation of the current segment, where $\theta = arctan(y_k - y^b, x_k - x^b)$. The distance from the current point, $(x_k, y_k)$, to the previous point, $(x_{k-1}, y_{k-1})$, is determined according to the equation $\bar{d} = \sqrt{(x_k - x_{k-1})^2 + (y_k - y_{k-1})^2}$.

When $d_k \geqq \kappa \bar{d}$, where $\kappa$ is a constant between 0 and 1 that is a threshold for the minimum turning angle between segments, a new segment is created. Otherwise, the current segment is extended (block 43) to include the current point. In one embodiment, $\kappa$ is set to 0.1. In a further embodiment, $l$, the length of the current segment, is compared to parameter L, which is a set minimum segment length. If $l > L$ and $d_k \geq \kappa \bar{d}$, then a new segment is created. Otherwise, the current segment is extended to include the current point. In one embodiment, $L$ is set to 0.7 meters but other minimum segment lengths are possible. When no further trajectory data is collected or once a turn is detected, the current segment is completed (block 45). Trace segmentation is applied to each additional trajectory data collected in real-time.

Trace segmentation produces line segments that fit to the trajectory of the wall-following of the robot 11 but due to odometry errors, the trajectories can be deformed due to measurement noise. Rectification corrects the deformations by making the line segments either parallel or perpendicular to one another. FIGURE 5 is a flow diagram showing map rectification for use in the method of FIGURE 2. Many indoor environments are rectilinear with perpendicular walls and the rectilinear interior can be used to correct noise in the line segments. The input of the rectification is a sequence of line segments $(l_i, \theta_i, t_i)$ generated from trace segmentation, and the output is a new sequence of line segments $(l_i, s_i)$, where s is the rectified angle. A constraint is applied so that any two neighboring segments are either aligned or rectilinear. Once rectified, each segment is a multiple of $/\pi 2$ from one another.

In one embodiment, the turning angle between two neighboring segments is examined and classified into discrete angles, for example, 0°, 90°, and so on using a straight-forward classification algorithm. A turning angle smaller than a threshold, for example, 45°, is classified as 0°, or straight, otherwise the turning angle is classified as a rectilinear turn. But this classification algorithm can be problematic in some instances. For example, in the case of four line segments,

with direction $\theta_i$ = 0°, 30°, 60°, and 90°, respectively, the turning angle between any two concurrent segments is only 30°, hence the straight-forward classification algorithm will classify each turning angle as 0°. However, the robot has actually finished a 90° turn. This problem can be fixed by extending the classification from the stateless classification of instantaneous turning angles described above to a state-based classification with turning angle history.

In a further embodiment, each line segment is rectified using not only the turning angle of the particular line segment but also a history horizon of previous line segments turning angles (block 51). For a line segment, i, the turning angle of the segment along with the history $\{i - 1, i - 2,. , i - H\}$ is considered, where H is the horizon length. The horizon length is the number of previous line segments that are taken into consideration to determine the turning angle of the current line segment and can be defined in a number of ways. For example, the horizon length can be the line segments within a physical distance, such as five meters, of the current segment. Alternatively, the horizon length can be defined as a set number of line segments prior to the current line segment. Other types of horizon lengths are possible. In any case, the line segments within the horizon are collectively considered to rectify the current line segment and can avoid the problems with the stateless classification described above. Furthermore, use of the history horizon can remove noisy data and provide move accurate mapping in the presence of obstacles when the obstacles are small in size compared to the history horizon since the line segments before and after the obstacle are used for rectification.

Next, the probability of the orientation of the current segment is described (block 52). In one embodiment, approximate sequential Bayesian filtering is used to recursively update an estimate of the posterior of underlying state $S_{i+1}$ with observation sequences $\overline{z_{i+1}} = \{z_0, z_1,..., z_{i+1}\}$ and given by the equation:

$$p\left(s_{i+1}\middle|\overline{z_{i+1}}\right) \propto \cdot p_o\left(z_{i+1}\middle|s_{i+1}\right) \cdot \int_S p_d\left(s_{i+1}\middle|s_i\right) \cdot p\left(s_i\middle|\overline{z_i}\right)ds_i. \qquad (1)$$

Equation (1) is sequential, the belief $p(s_{i+1}|\overline{z_{i+1}})$ is computed from the belief $p(s_i|\overline{z_i})$ from the previous time i at each step. The integral in Equation (1) is a single step of prediction bringing the previous state $s_i$ up to the current time $s_i+_1$ and then a new external measurement $z_{i+1}$ is applied to modify the state. The prediction is then multiplied by a likelihood, reflecting the contribution of observation $z_{i+1}$ using an observation model, $p_o(z_{i+1}|s_{i+1})$.

Two key components that are essential in the sequential Bayesian filtering approach are the dynamics model, $p_d(s_{i+1}|s_i)$, and the observation model, $p_o(z|s)$.

The dynamics model describes the evolution, or drifting, of the underlying state. Here, $s_i$ is the orientation directions $\{s_i, s_{i+1},..., s_{i-H}\}$. Since the line segments defining the walls are assumed rectilinear, or to intersect each other at perpendicular angles, the model is given by the equation:

$$s_{i+1} = \begin{cases} s_i & p_S = 0.5; & \% \text{ straight} \\ s_i + \pi & p_U = 0.1; & \% \text{ U - turn} \\ s_i - \dfrac{\pi}{2} & p_L = 0.2; & \% \text{ right turn} \\ s_i + \dfrac{\pi}{2} & p_R = 0.2; & \% \text{ left turn} \end{cases} \qquad (2)$$

Although the above particular probability distribution is used, other distributions are possible. For example, the above model can be extended to eight directions instead of four for environments that have many 45 degree angles.

Next, the observation model describes the relationship between the underlying states and measurement observations. The measurements of turning angle $\theta$ from the odometry are used over the history horizon, where z = $\{\theta_i, \theta_{i-1}, ... , \theta_{i-H}\}$. An assumption is made that the measured turning angle is the true turning angle but is contaminated with noise, for example, $\theta_{i+1} - \theta_{i-j} = s_i, - s_{i-j}, + n_j$, where j indicates the *j*-th previous segment *and $n_j$ is* noise.

In one embodiment, a generalized Gaussian distribution (GGD) is used as a model for the noise. Though, other noise models are possible. The GGD is parameterized by a shape parameter, r°, and a standard deviation, $\sigma$. In a further embodiment, GGD includes Gaussian distributions as a special case, when r = 2, but is more flexible because the shape parameter r can be varied to describe noise with heavy tails (when *r* < 2). This can be necessary for modeling angle noise because odometry data can be quite noisy, especially when the line segment length is short. For example, when a robot 11 is almost stationary, any angle measurement from odometry is possible, in other words, $\theta$ = arctan($y_2 - y_1$, $x_2 - x_1$) is arbitrary when the distance between ($x_1, y_1$) and ($x_2, y_2$) is very small or approaching zero. In one embodiment, a shape parameter, where r = 0.5 and a standard deviation of 10° for *n1*, and (H - 1).20° for $n_j$ where 1 $\leq j < H$ are used.

Other shape parameter and standard deviation amounts are possible.

In a further embodiment, the turn information, where $t$ = {STRAIGHT, LEFT, RIGHT}, obtained from trace segmentation, as described above with reference to FIGURE 3, is used in rectification. A simple likelihood function, $p(t|s)$ = 1, is applied if the turn state in the hypothesis determined above agrees with the turn observation $t$, and $p(t|s)$ = 0.5 if the two do not agree. Hypotheses are discounted, such as by half, that conflict with sensor observations. The observation likelihood is multiplied to that of the odometry data, assuming that the different sensing modalities are independent of one another, since an assumption is made that odometry error is independent to bumper and wall sensor error.

The rectification process then takes the line segment inputs over time and maintains up to $N$, for example, 100, of the most probable state sequences and their respective probabilities $p_n$. Whenever a new line segment ($l$, $\theta$, $t$) is determined (block 53), each existing state sequence ($s_0$, $s_1$, ... $s_i$) forks into four possibilities, with the new traveling direction $s_{i+1}$ being straight, a left turn, a right turn, or a U-turn. Probabilities of the new state sequences are updated using the dynamics model and observation model as described above. State sequences with low probabilities ($p_n < 1/N$) are discarded, and up to N most probable state sequences are kept, the probabilities are then renormalized to sum up to 1 by $p_n \leftarrow p_n /P$ and P is $\Sigma\ p_n$, which leads up to the next update when a new segment is determined. The final mapping result is the most probable state sequence (block 54).

Detecting whether the robot 11 is looping around the environment by traversal over the same area is important to conserve time and efficient power usage. If looping is detected, the robot 11 may cease further movement or migrate to previously unexplored areas. FIGURE 6 is a flow diagram showing loop detection and closure for use in the method of FIGURE 2. Since the environment map is generated from line segments, the map can be represented (block 61) by a one-dimensional function. In one embodiment, the function is represented as s(d), where d is the traveled distance from the robot 11 starting position, or point, and s(d) is the wall orientation at that point.

In a further embodiment, $s$ can be accumulated turn counts (ATC) at a particular distance from the staring position. For example, a left turn can be assigned a value of I, while a right turn is assigned a value of-1. ATC is the sum of all turns up to the current point. High positive or low negative, such as $\geq$ 10 or $\leq$-10, ATC counts can indicate a loop. ATC counts of 4 or -4 indicate a complete left or right circle. Other values for $s$ are possible.

In any event, wall orientation $\theta$, is then s . $\pi/2$. Loop detection is performed whenever a new segment ($l$, $\theta$, $t$) is rectified. In particular, if the location of the first corner of the rectified map is ($x_1$, $y_1$), and there are already ($x_0$, $y_0$) ,($x_1$, $y_1$), ($x_2$, $y_2$), ......, ($x_m$, $y_m$) points in the map, a loop is detected (block 62) at ($lm+1$, $s_{m+1}$) if the following three conditions are satisfied:

1) $s_m = 2\pi$ or $s_m = -2\pi$, in other words, a full turn around in angles by the robot 1!;
2) $s_{m+1} \neq$ sm, in other words, a corner at turn around; and

3) $\sqrt{\left(x_m - x_1\right)^2 + \left(y_m - y_1\right)^2} < p\sum_{i=1}^{m} l_i$   , where ($x_m$, $y_m$) is the location of the last corner in the rectified map and $p$ is a small scale distance factor, for example 0.1, though other distance factors are possible, and $li$ is distance between ($i$-1)'th and $i$'th points.

In some structures, loop detection can be difficult or even fail due to odometry error or error introduced by mapping, for example, linearization of curved wall segments or rectification of non-rectilinear segments. In a further embodiment, autocorrelation in the rectified segment sequence can be determined to find the corresponding matching points. When the robot 11 is looping while wall-following, the sequence $s$(d) may appear repetitive, for example, a portion of the sequence can be similar to another portion of the sequence. Such similarities can be detected via signal correlation. Even though the robot 11 may initially miss the closing point, the robot 11 can identify the closing point after detecting the autocorrelation in the rectified segment sequence. In particular, if there is a loop in $s_1$, $s_2$, ..., $s_m$, $s_{m+1}$..., the sequence starting from $s_m$ would be similar to that from $s_1$.

Once segment correspondence is determined in a loop, the lengths of the line segments are adjusted (block 63) by subtracting estimated error, $\Delta_{i,}$ from $l_i$ for each segment $i$ to close the loop (block 64) at the first overlapping corner at the end of segment m. Maximum likelihood estimation is used to find $\Delta = [\Delta_1\ \Delta\ _m]^T$. The estimated orientation of the segments remains unchanged. Line segment length, $l_{i,}$ is assumed to have zero mean Gaussian noise with variance $\sigma_i^2$. That is, $\Delta_i \sim N(0, \sigma_i^2)$.

If $\sigma_i^2 \propto l_i$ is assumed, cumulative Gaussian noise on odometry, $\sigma_i^2 = l_i$ can be used because the proportionality constant factors out in the minimization further described below. On the other hand, if assume error or noise is independent of distances, which are caused mainly by turns, $\sigma_i^2 = 1$ can be used. The maximum likelihood estimate of $\Delta$ is the solution to

$$\begin{array}{l} \text{minimize} \quad \sum_{i=1}^{m}\left(\frac{\Delta_i}{\sigma_i}\right)^2 \\ \Delta \in \Re^n \\ \text{subject to} \quad \sum_{i=1}^{m}(l_i - \Delta_i)\cos\theta_i = 0 \\ \qquad\qquad \sum_{i=1}^{m}(l_i - \Delta_i)\sin\theta_i = 0 \end{array} \qquad (3)$$

By defining $z_i = \dfrac{\Delta_i}{\sigma_i}$, this can be reformulated as a least norm problem, $\sigma_i$

$$\begin{array}{l} \Delta \in \Re^n \\ \text{subject to} \quad \begin{bmatrix} (\sigma \circ \cos\theta)^T \\ (\sigma \circ \sin\theta)^T \end{bmatrix} z = \sum_{i=1}^{m}\left(\sigma_i \begin{bmatrix} \cos\theta_i \\ \sin\theta_i \end{bmatrix}\right) \end{array} \qquad (4)$$

where is the Hadamard (element-wise) product, $\theta = [\theta_1 \dots \theta_m]^T$, and $\sigma = [\sigma_1 \dots \sigma_m]^T$. The solution is then given by

$$A = \begin{bmatrix} (\sigma \circ \cos\theta)^T \\ (\sigma \circ \sin\theta)^T \end{bmatrix} \qquad (5)$$

$$= \begin{bmatrix} \sigma_1 \cos\theta_1 \dots \sigma_m \cos\theta_m \\ \sigma_1 \sin\theta_1 \dots \sigma_m \sin\theta_m \end{bmatrix} \qquad (6)$$

$$\Delta = \sigma \circ \left( A^T (AA^T)^{-1} \sum_{i=1}^{m}\left( l_i \begin{bmatrix} (\cos\theta_i) \\ (\sin\theta_i) \end{bmatrix} \right) \right) \qquad (7)$$

Note that the matrix being inverted is 2 x 2, which is can be easily computed analytically for on-board real-time implementation.

Loop detection can be used to not only to identify and close looping from one mobile robot 11 but also to find similarity between partial or completed maps determined by two or more different robots and merge the maps into one. Additionally, multiple smaller maps can be combined into a larger map by aligning the matching portions of the maps. Further, a map generated by the mobile robot can be compared or aligned against another, perhaps, larger, prior known map.

**Claims**

1. A system for real-time mapping of an indoor environment using a mobile robot with short range sensing, comprising:

a segmentation module applying trace segmentation to raw trajectory data comprising a plurality of trajectory points from wall-following to generate line segments;

a rectification module rectifying the line segments to one another; and

a map module generating a map from the rectified line segments,

**characterized in that** the rectification module is adapted to identify a history horizon of the current line segment, wherein the history horizon is a neighborhood of line segments within a distance of the current line segment, to identify (51) a turning angle of each of the line segments based on the history horizon, and to rectify the line segments based on the line segments of the history horizon and the turning angle.

2.  A system according to claim 1, further comprising:

a line segment module generating an initial line segment with two of the trajectory points and extending the line segment through each of the next trajectory points until a turn is detected, for example through a change in one of a bump sensor state, a wall sensor state, and odometry.

3.  A system according to claim 1 or claim 2, further comprising a robot for generating the raw trajectory data.

4.  A system according to any of the preceding claims, further comprising:

a constraint module applying a constraint so any two neighboring line segments are one of aligned or rectilinear to one another.

5.  A system according to any of the preceding claims, further comprising:

a probability module determining a plurality of probabilities of a current direction of the current line segment and each of the line segments of the history horizon and completing the map using the most probable direction for each of the line segments.

6.  A system according to any of the preceding claims, further comprising:

a representation module representing the map as a one-dimensional function;

a loop module detecting a loop comprising overlapping line segment within the map ;

an error module adjusting line segment length of the overlapping line segments by an estimated error; and

a closure module closing the loop at the intersection of the adjusted line segments.

7.  A method for real-time mapping of an indoor environment using a mobile robot with short range sensing, comprising:

receiving raw trajectory data comprising a plurality of trajectory points from wall-following;

applying trace segmentation (22) to the raw trajectory data to generate line segments;

rectifying (23) the line segments to one another; and

generating (25) a map from the rectified line segments,

**characterized by** identifying a history horizon of the current line segment, wherein the history horizon is a neighborhood of line segments within a distance of the current line segment, identifying (51) a turning angle of each of the line segments based on the history horizon, and rectifying the line segments based on the line segments of the history horizon and the turning angle.

8.  A method according to claim 7, further comprising:

generating (41) an initial line segment with two of the trajectory points; and

extending (43) the line segment through each of the next trajectory points until a turn is detected, wherein the turn is preferably detected through a change in one of a bump sensor state, a wall sensor state, and odometry.

9.  A method according to claim 7 or claim 8 wherein the raw trajectory data is generated by a robot.

10. A method according to any of claims 7 to 9, further comprising applying a constraint so any two neighboring line segments are one of aligned or rectilinear to one another.

11. A method according to any of claims 7 to 10, wherein the line segments are rectified according to the equation:

$$p\left(s_{i+1}\middle|\overline{z_{i+1}}\right) \propto \cdot p_o\left(z_{i+1}\middle|s_{i+1}\right) \cdot \int_S p_d\left(s_{i+1}\middle|s_i\right) \cdot p\left(s_i\middle|\overline{z_i}\right) ds_i$$

where $p$ is probability of a rectified sequence given the sequence of measurements, $s$ is state, in this case, orientation of a segment, $z$ is observation, including both odometry and sensor observations, $p(s_{i+1}|\overline{z}\ )$ is computed from the belief $p(s_i|\overline{z})$ from the previous time, $i$, at each step, $z_{i+1}$ is observation, $p_o(z_{i+1}|s_{i+1})$, $p_o(z|s)$ is an observation model, $p_d(s_{i+1}|s_i)$ is a dynamics model, $\theta$ is turning angle, where $z = \{\theta_i, \theta_{i-1}, ... \theta_{i-H}\}$, and $H$ is a history horizon.

**12.** A method according to any of claims 7 to 11, further comprising:

determining a plurality of probabilities of a current direction of the current line segment and each of the line segments of the history horizon ;
completing the map using the most probable direction for each of the line segments.

**13.** A method according to any of claims 7 to 12, further comprising:

representing the map as a one-dimensional function;
detecting a loop comprising overlapping line segment within the map ;
adjusting line segment length of the overlapping line segments by an estimated error; and
closing the loop at the intersection of the adjusted line segments.

**Patentansprüche**

**1.** System zur Echtzeit-Abbildung einer Innenumgebung unter Verwendung eines mobilen Roboters mit Nahbereichsabtastung, umfassend:

ein Segmentierungsmodul, das Spursegmentierung auf Bewegungsbahn-Rohdaten, die eine Vielzahl von Bewegungsbahnpunkten aus der Wandverfolgung umfassen, zur Erzeugung von Liniensegmenten anwendet;
ein Ausrichtungsmodul, das die Liniensegmente zueinander ausrichtet; und
ein Kartenmodul, das eine Karte aus den ausgerichteten Liniensegmenten erzeugt,
**dadurch gekennzeichnet, dass** das Ausrichtungsmodul dazu eingerichtet ist, einen Verlaufshorizont des aktuellen Liniensegments zu identifizieren, wobei der Verlaufshorizont aus benachbarten Liniensegmenten in einer Distanz des aktuellen Liniensegments besteht, um einen Drehwinkel der einzelnen Liniensegmente basierend auf dem Verlaufshorizont zu identifizieren (51) und die Liniensegmente basierend auf den Liniensegmenten des Verlaufshorizontes und des Drehwinkels auszurichten.

**2.** System nach Anspruch 1, das weiterhin umfasst:

ein Liniensegmentmodul, das ein Anfangs-Liniensegment mit zwei der Bewegungsbahnpunkte erzeugt und das Liniensegment durch jeden der nächsten Bewegungsbahnpunkte erweitert, bis eine Kurve erkannt wird, beispielsweise durch eine Zustandsänderung von einem aus Stoßsensor, Wandsensor und Odometrie.

**3.** System nach Anspruch 1 oder 2, das weiterhin einen Roboter zum Erzeugen der Bewegungsbahn-Rohdaten umfasst.

**4.** System nach einem der vorhergehenden Ansprüche, des Weiteren umfassend:

ein Beschränkungsmodul, das eine Beschränkung auf zwei benachbarte Liniensegmente anwendet, so dass diese entweder fluchtend oder geradlinig zueinander sind.

**5.** System nach einem der vorhergehenden Ansprüche, des Weiteren umfassend:

ein Wahrscheinlichkeitsmodul, das eine Vielzahl von Wahrscheinlichkeiten einer aktuellen Richtung des aktuellen Liniensegments und jedes Liniensegments des Verlaufshorizontes bestimmt und die Karte unter Verwendung der wahrscheinlichsten Richtung für die einzelnen Liniensegmente vervollständigt.

**6.** System nach einem der vorhergehenden Ansprüche, des Weiteren umfassend:

ein Darstellungsmodul zum Darstellen der Karte als eindimensionale Funktion;
ein Schleifenmodul zum Erkennen einer Schleife, umfassend überlappende Liniensegmente in der Karte;
ein Fehlermodul zum Anpassen der Liniensegmentlänge der überlappenden Liniensegmente um einen geschätzten Fehler; und
ein Schließmodul zum Schließen der Schleife an der Schnittstelle der angepassten Liniensegmente.

**7.** Verfahren zur Echtzeit-Abbildung einer Innenumgebung unter Verwendung eines mobilen Roboters mit Nahbereichsabtastung, umfassend:

Empfangen von Bewegungsbahn-Rohdaten, die eine Vielzahl von Bewegungsbahnpunkten aus der Wandverfolgung umfassen;
Anwenden von Spursegmentierung (22) auf die Bewegungsbahn-Rohdaten, um Liniensegmente zu erzeugen;
Ausrichten (23) der Liniensegmente zueinander; und
Erzeugen (25) einer Karte aus den ausgerichteten Liniensegmenten,
**gekennzeichnet durch** das Identifizieren eines Verlaufshorizontes des aktuellen Liniensegments, wobei der Verlaufshorizont aus benachbarten Liniensegmenten in einer Distanz des aktuellen Liniensegments besteht,
Identifizieren (51) eines Drehwinkels der einzelnen Liniensegmente basierend auf dem Verlaufshorizont und
Ausrichten der Liniensegmente basierend auf den Liniensegmenten des Verlaufshorizontes und des Drehwinkels.

**8.** Verfahren nach Anspruch 7, das weiterhin umfasst:

Erzeugen (41) eines ersten Liniensegments mit zwei der Bewegungsbahnpunkte; und
Erweitern (43) des Liniensegments um jeden der nächsten Bewegungsbahnpunkte, bis eine Kurve erkannt wird, wobei die Kurve vorzugsweise durch eine Zustandsänderung von einem aus Stoßsensor, Wandsensor und Odometrie erkannt wird.

**9.** Verfahren nach Anspruch 7 oder 8, wobei die Bewegungsbahn-Rohdaten von einem Roboter erzeugt werden.

**10.** Verfahren nach einem der Ansprüche 7 bis 9, des Weiteren umfassend das Anwenden einer Beschränkung auf zwei benachbarte Liniensegmente, so dass diese entweder fluchtend oder geradlinig zueinander sind.

**11.** Verfahren nach einem der Ansprüche 7 bis 10, wobei die Liniensegmente nach folgender Gleichung ausgerichtet werden:

$$p\left(s_{i+1}\big|\overline{z_{i+1}}\right) \propto \cdot\, p_o\left(z_{i+1}\big|s_{i+1}\right) \cdot \int_S p_d\left(s_{i+1}\big|s_i\right) \cdot p\left(s_i\big|\overline{z_i}\right) ds_i$$

wobei $p$ die Wahrscheinlichkeit einer gerichteten Sequenz unter der gegebenen Messungssequenz ist, s ein Zustand, in diesem Fall die Ausrichtung eines Segments ist, z Beobachtung einschließlich Odometrie und Sensorbeobachtungen ist, $p(s_{i+1}|\overline{z})$ aus der Annahme $p(s_i|\overline{z})$ des vorhergehenden Males, $i$, bei jedem Schritt berechnet wird, $z_{i+1}$ Beobachtung ist, $p_o(z_{i+1}|s_{i+1})$, $p_o(z|s)$ ein Beobachtungsmodell ist, $p_d(s_{i+1}|s_i)$ ein Dynamikmodell ist, θ der Drehwinkel ist, wobei $z = \{\theta_i,\ \theta_{i-l},\ ...\theta_{i-H}\}$, und H ein Verlaufshorizont ist.

**12.** Verfahren nach einem der Ansprüche 7 bis 11, das weiterhin umfasst:

Bestimmen einer Vielzahl von Wahrscheinlichkeiten einer aktuellen Richtung des aktuellen Liniensegments und von jedem der Liniensegmente des Verlaufshorizontes;
Vervollständigen der Karte unter Verwendung der wahrscheinlichsten Richtung für jedes der Liniensegmente.

**13.** Verfahren nach einem der Ansprüche 7 bis 12, das weiterhin umfasst:

Darstellen der Karte als eindimensionale Funktion;
Erkennen einer Schleife, umfassend überlappende Liniensegmente in der Karte;
Anpassen der Liniensegmentlänge der überlappenden Liniensegmente um einen geschätzten Fehler; und
Schließen der Schleife an der Schnittstelle der angepassten Liniensegmente.

**Revendications**

1. Système de cartographie en temps réel d'un environnement intérieur en utilisant un robot mobile avec une détection à courte portée, comprenant :

   un module de segmentation appliquant une segmentation de trace à des données de trajectoire brutes comprenant une pluralité de points de trajectoire à partir d'un déplacement suivant les parois pour générer des segments de droite ;
   un module de rectification rectifiant les segments de droite l'un par rapport à l'autre ; et
   un module de carte générant une carte à partir des segments de droite rectifiés,
   **caractérisé en ce que** le module de rectification est adapté pour identifier un horizon d'historique du segment de droite actuel, où l'horizon d'historique est un voisinage de segments de droite à une distance du segment de droite actuel, pour identifier (51) un angle de virage de chacun des segments de droite sur la base de l'horizon d'historique, et pour rectifier les segments de droite sur la base des segments de droite de l'horizon d'historique et de l'angle de virage.

2. Système selon la revendication 1, comprenant en outre :

   un module de segment de droite générant un segment de droite initial avec deux des points de trajectoire et étendant le segment de droite à travers chacun des points de trajectoire suivants jusqu'à ce qu'un virage est détecté, par exemple par un changement de l'un parmi un état de détecteur de bosses, un état de détecteur de parois, et l'odométrie.

3. Système selon la revendication 1 ou 2, comprenant en outre un robot destiné à générer les données de trajectoire brutes.

4. Système selon l'une des revendications précédentes, comprenant en outre :

   un module de contrainte appliquant une contrainte de sorte que deux segments de droite adjacents quelconques soient alignés ou rectilignes l'un par rapport à l'autre.

5. Système selon l'une des revendications précédentes, comprenant en outre :

   un module de probabilité déterminant une pluralité de probabilités d'une direction actuelle du segment de droite actuel et de chacun des segments de droite de l'horizon d'historique et complétant la carte en utilisant la direction la plus probable pour chacun des segments de droite.

6. Système selon l'une des revendications précédentes, comprenant en outre :

   un module de représentation représentant la carte sous la forme d'une fonction unidimensionnelle ;
   un module de boucle détectant une boucle comprenant un segment de droite de chevauchement à l'intérieur de la carte ;
   un module d'erreur réglant la longueur de segment de droite des segments de droite de chevauchement par une erreur estimée ; et
   un module de fermeture fermant la boucle au niveau de l'intersection des segments de droite réglés.

7. Procédé de cartographie en temps réel d'un environnement intérieur en utilisant un robot mobile avec une détection à courte portée, comprenant le fait :

   de recevoir des données de trajectoire brutes comprenant une pluralité de points de trajectoire à partir d'un déplacement suivant les parois ;
   d'appliquer une segmentation de trace (22) aux données de trajectoire brutes pour générer des segments de droite ;
de rectifier (23) les segments de droite l'un par rapport à l'autre ; et
de générer (25) une carte à partir des segments de droite rectifiés,
**caractérisé par** le fait d'identifier un horizon d'historique du segment de droite actuel, où l'horizon d'historique est un voisinage de segments de droite à une distance du segment de droite actuel, d'identifier (51) un angle de virage de chacun des segments de droite sur la base de l'horizon d'historique, et de rectifier les segments de droite sur la base des segments de droite de l'horizon d'historique et de l'angle de virage.

8. Procédé selon la revendication 7, comprenant en outre le fait :

de générer (41) un segment de droite initial avec deux des points de trajectoire ; et
d'étendre (43) le segment de droite à travers chacun des points de trajectoire suivants jusqu'à ce qu'un virage est détecté, où le virage est détecté de préférence par un changement de l'un parmi un état de détecteur de bosses, un état de détecteur de parois, et l'odométrie.

9. Procédé selon la revendication 7 ou 8, dans lequel les données de trajectoire brutes sont générées par un robot.

10. Procédé selon l'une des revendications 7 à 9, comprenant en outre le fait d'appliquer une contrainte de sorte que deux segments de droite adjacents quelconques soient alignés ou rectilignes l'un par rapport à l'autre.

11. Procédé selon l'une des revendications 7 à 10, dans lequel les segments de droite sont rectifiés selon l'équation :

$$p\left(s_{i+1} \middle| \overline{z_{i+1}}\right) \propto \cdot p_o\left(z_{i+1} \middle| s_{i+1}\right) \cdot \int_S p_d\left(s_{i+1} \middle| s_i\right) \cdot p\left(s_i \middle| \overline{z_i}\right) ds_i$$

où p est la probabilité d'une séquence rectifiée étant donnée la séquence de mesures, s est un état, dans ce cas, l'orientation d'un segment, z est une observation, comportant à la fois des observations odométriques et de détecteurs, $p(s_{i+1}|\overline{z})$ est calculée à partir de la croyance $p(s_i|\overline{z})$ de l'instant précédent, i, à chaque étape, $z_{i+1}$ est une observation, $p_o(z_{i+1}|s_{i+1})$, $p_o(z|s)$ est un modèle d'observation, $p_d(s_{i+1}|s_i)$ est un modèle dynamique, $\theta$ est un angle de virage, où $z = \{\theta_i, \theta_{i-1}, \ldots\theta_{i-H}\}$, et H est un horizon d'historique.

12. Procédé selon l'une des revendications 7 à 11, comprenant en outre le fait :

de déterminer une pluralité de probabilités d'une direction actuelle du segment de droite actuel et de chacun des segments de droite de l'horizon d'historique ;
de compléter la carte en utilisant la direction la plus probable pour chacun des segments de droite.

13. Procédé selon l'une des revendications 7 à 12, comprenant en outre le fait :

de représenter la carte sous la forme d'une fonction unidimensionnelle ;
de détecter une boucle comprenant un segment de droite de chevauchement à l'intérieur de la carte ;
de régler la longueur de segment de droite des segments de droite de chevauchement par une erreur estimée ; et
de fermer la boucle au niveau de l'intersection des segments de droites réglés.

FIG. 1

20

START

WALL-FOLLOWING — 21

TRACE SEGMENTATION — 22

RECTIFICATION — 23

LOOP DETECT AND CLOSE — 24

COMPLETE MAP — 25

END

# FIG. 2

*30*

*33*

TRACK RIGHT WALL

NO BUMP

BUMP

SPIN LEFT

*32*

NO WALL AFTER
ONE ROTATION

BUMP

DRIVE STRAIGHT

*31*

## FIG. 3

_40_

```
                    ┌──────────────────────────┐
                    │   TRACE SEGMENTATION     │
                    └──────────────────────────┘
                                 │
                                 ▼
          ┌──────────────────────────────────────┐
   41 ─── │        BEGIN NEW SEGMENT             │ ◄───┐
          └──────────────────────────────────────┘     │
                                 │                      │
                                 ▼                      │
          42 ◄── ◇ DETECT TURN ? ◇  ──── YES ──────────┘
                                 │
                                NO
                                 │
                                 ▼
          ┌──────────────────────────────────────┐
   43 ─── │        EXTEND SEGMENT                │
          └──────────────────────────────────────┘
                                 │
                                 ▼
          YES ◄── ◇ FURTHER TRAJECTORY DATA? ◇ ── 44
                                 │
                                NO
                                 │
                                 ▼
          ┌──────────────────────────────────────┐
          │        COMPLETE SEGMENT              │ ── 45
          └──────────────────────────────────────┘
```

## FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03040845 A